# EUROPEAN PATENT SPECIFICATION

(11) **EP 1 501 913 B1**
(45) Date of publication and mention of the grant of the patent: **25.01.2006**
(21) Application number: 03723526.4
(22) Date of filing: 08.05.2003
(51) Int. Cl.: C10L 3/10, B01J 20/02, B01J 20/12

(54) **METHOD FOR DESULPHURISATION OF NATURAL GAS**
VERFAHREN ZUR ENTSCHWEFELUNG VON ERDGAS.
PROCEDE DE DESULFURATION D'UN GAZ NATUREL

(30) Priority: 08.05.2002 NL 1020554
(43) Date of publication of application: 02.02.2005
(73) Proprietor: Stichting Energieonderzoek Centrum Nederland, 1755 LE Petten (NL)
(72) Inventor: DE WILD, Paulus, Johannes, NL-1873 GH Groet (NL)
(74) Representative: van Westenbrugge, Andries
(86) International application number: PCT/NL2003/000341
(87) International publication number: WO 2003/095594

(56) References cited:
- DE-A- 4 100 253

## Description

### Field of the invention

The invention relates to a method for removing gaseous organic sulphur compounds, in particular tetrahydrothiophene (THT), from a stream of fuel gas, in particular, natural gas. The method according to the invention can, for example, be employed in a gas filter for the removal of organic sulphur compounds from natural gas for a PEMFC fuel cell.

### Prior art

The 'polymer electrolyte (or proton exchange) membrane fuel cell' (PEMFC) is an important candidate for relatively small-scale applications as stationary micro combined heat and power (micro heat and power) and for electrical transport. The fuel for the PEMFC is hydrogen. In the short term successful use of PEMFCs is dependent on the availability of hydrogen, for which there is as yet no (large-scale) infrastructure. Currently, therefore, a considerable amount of work is being carried out all over the world on small-scale catalytic fuel conversion systems in order to generate hydrogen from logistical fuels, such as diesel, petrol, naphtha, LPG and natural gas, at the location of the fuel cell. Amongst these logistical fuels, the use of natural gas offers many advantages in this regard. For instance, natural gas has a high energy density, is relatively clean and can easily be stored in liquid form. Moreover, natural gas (still) occurs all over the world, frequently in appreciable quantities.

Depending on the nature and origin, natural gas contains a greater or lesser proportion of sulphur, for example in the form of naturally occurring compounds such as mercaptans and other organo-sulphur compounds, hydrogen sulphide and carbonyl sulphide. For domestic use, natural gas is first desulphurised at the source, after which, on the grounds of safety considerations with respect to leaks, a sulphur-containing odorant is added. There are statutory regulations in this regard in various countries. Widely used odorants are, inter alia, ethyl mercaptan (EM), normal propyl mercaptan (NPM), isopropyl mercaptan (IPM), secondary butyl mercaptan (SBM), tertiary butyl mercaptan (TBM), dimethyl sulphide (DMS), dimethyl disulphide, diethyl sulphide, diethyl disulphide, tetrahydrothiophene (THT) or mixtures of these odorants. Which odorant or which mixture of odorants is used depends on, inter alia, the degree of adsorption of the odorant(s) on specific constituents of the soil through which the natural gas pipelines run. The cyclic sulphide tetrahydrothiophene (THT, tetramethylene sulphide) widely used in The Netherlands and in the rest of Europe offers many advantages for use as natural gas odorant, such as a low odour detection limit, a typical 'gas' smell, a low capacity for oxidation in gas distribution systems and a relatively good soil permeability. In The Netherlands approximately 18 mg THT is added per m³ natural gas. This corresponds to approximately 5 ppm sulphur. Incidentally, Dutch natural gas naturally contains little sulphur.

A typical conversion system for natural gas comprises the following process steps:
1. a natural gas processor for converting natural gas into synthesis gas via, for example, catalytic partial oxidation,
2. a water gas shift section to minimise the CO content and to maximise the hydrogen content in the synthesis gas,
3. a system for the preferential oxidation of the final residues of carbon monoxide in the synthesis gas to prevent poisoning of the PEMFC,
4. a PEMFC unit and an after-burner.

The catalysts that are used in such a natural gas conversion chain (steps 1 - 3) and in the polymer fuel cell are sensitive to sulphur in the fuel. This applies in particular for the low temperature shift catalyst based on copper and zinc oxide and the platinum-based anode catalyst of the polymer fuel cell. The sensitivity of the other catalytic process steps to sulphur is uncertain, but probably high. As a precaution it is therefore best to remove sulphur compounds from the natural gas with the aid of a suitable filter material before use in the conversion chain.

On the basis of the annual demand for heat by an average Dutch family, a micro heat and power installation will consume approximately 1,200 m³ natural gas for electricity and heat production. This quantity will have to be desulphurised to protect the natural gas conversion chain and to protect the fuel cell. A quantity of 1,200 m³ natural gas to be purified corresponds to approximately 21.6 g THT. For a filter volume of 5 litres, the capacity of the filter material must be at least 4.32 gram THT per litre. For a fill density of the filter material of 0.6 kg/l this corresponds to a sulphur adsorption capacity of approximately 0.6 % (m/m) (as S). Incidentally, a micro heat and power installation can consume markedly more than 1,200 m³ natural gas. For instance, an additional demand for heat is met by means of a peak burner. The natural gas that is combusted by this means does not have to be freed from THT. This also applies in respect of the natural gas that is used for cooking and producing hot tap water.

For successful application in a natural gas-fuelled micro combined heat and power installation, a THT filter must meet the following conditions:
a) high activity and selectivity for the removal of THT (that is to say as low as possible a residual content of THT in the filtered natural gas),
b) not give rise to an exothermic reaction during the adsorption process,
c) have such a high capacity that the filter has to be replaced at most once per year (for example during the annual service of the system),
d) have a size that is as small as possible (maximum 5 litres, assuming that a micro heat and power installation will be approximately the same size as a conventional central heating installation (volume of approximately 200 - 3001),
e) be robust (not sensitive to variations in gas demand and gas composition (with the exception of THT)),
f) be inexpensive in use,
g) be easy to fit and to replace,
h) give rise to no environmental objections with regard to fitting, use and disposal of used filter material.

Because of the variety of natural and added sulphur compounds that can occur in logistical fuels, in conventional fuel conversion systems (industrial hydrogen production, (petro)chemistry) use is frequently made of a two-step process to remove sulphur from the feed. Briefly this process consists of hydro-desulphurisation (HDS; catalytic conversion of organo-sulphur compounds with (recycled) H₂ to give H₂S) followed by H₂S removal using, for example, iron oxide or zinc oxide. These technologies have more than proved their worth on an industrial scale. The industrial HDS/ZnO technology is less suitable for a relatively small-scale application such as the removal of THT from natural gas for micro total power because of the scale, complexity and cost price.

Little is known from the literature about the direct (single step) removal of low concentrations of THT from natural gas in the context of hydrogen production for PEMFC applications. In general, the use of active charcoal, molecular sieves or zeolites is mentioned as the technology for the removal of sulphur compounds from natural gas at ambient temperature. For instance, in WO 00/71249 a molecular sieve is described as adsorbent and catalyst for the removal of sulphur compounds from both gases (for example ethyl mercaptan from natural gas) and liquids and in EP-A 781 832 the use of type A, X, Y and MFI zeolites as adsorbents for H₂S and THT in natural gas is described. However, the adsorption capacity of such adsorbents for odorants such as THT in natural gas is so low that for annual use in a domestic micro heat and power installation a high volume of adsorbent is needed (typically more than 10 litres). This is not desirable in a small-scale installation.

In EP-A 1 121 977 a new zeolite is described as adsorbent for the removal of sulphur compounds from, for example, natural gas. The zeolite is of the X, Y, or β type and contains - ion-exchanged - silver, copper, zinc, iron, cobalt or nickel. The silver-exchanged Y zeolite (Ag(Na)-Y) in particular proves very effective in the removal of a mixture of 1.2 ppm TBM and 1.8 ppm DMS from city gas (87.8 % methane, 5.9 % ethane, 4.6 % propane, 0.8 % n-pentane and 0.8 % i-pentane). When this gas is passed through, the sulphur is removed virtually quantitatively. When the zeolite becomes saturated, the sulphur concentration in the filtered gas increases. When a level of 0.1 ppm is reached, the zeolite is found to have adsorbed approximately 4 % (m/m) sulphur (as S). Because of the large amount of silver on the zeolite, the commercial cost price will be high. Moreover, after use the spent material will have to be treated as chemical waste. This document also describes the results of comparative adsorption experiments with commercial zeolites and other commercial adsorbents such as active charcoal, zinc oxide, active alumina and silica gel. With the exception of an Na-X zeolite (capacity 0.23 % (m/m) S), all these materials are found to have a very low adsorption capacity (< 0.08 % (m/m) as S) for TBM and TMS.

The aim of this invention is, therefore, to find a method for the removal of sulphur-containing organic odorants in natural gas, such as THT, wherein an inexpensive and environmentally friendly material is used that has a high activity and high capacity for the removal of sulphur-containing organic odorants in natural gas, such as THT. A further aim of this invention is to find a method that is able to remove sulphur-containing organic odorants from the fuel gases at room temperature, without an exothermic effect arising in the adsorbent.

### Summary of the invention

Surprisingly, it has been found that certain naturally occurring clay minerals from the hormite group, in particular sepiolite, are particularly active at room temperature in the removal of THT from natural gas and are able to adsorb an appreciable amount of THT. The invention therefore relates to a method for the removal of gaseous organo-sulphur compounds, in particular THT from fuel gas streams in that the gas stream is brought into contact with an adsorbent, characterised in that the adsorbent used is a clay mineral from the hormite group, and wherein the clay mineral comprises, sepiolite. In particular the clay mineral is sepiolite and the fuel gas stream comprises natural gas.

The invention also relates to a method wherein the clay mineral has been provided with a metal salt or a metal oxide, or a method wherein the clay mineral is combined with a second adsorbent, a defined in claim 13.

The invention also relates to a combination of a gas filter based on a clay mineral from the hormite group and a (PEMFC) fuel cell.

### Description of the figures

In Figure 1 the recorded THT breakthrough curves (THT concentration in the filtered natural gas plotted against the duration of flow) are shown for various adsorbent samples, specifically: active charcoal; active charcoal impregnated with copper and chromium; copper oxide/zinc oxide/alumina; and sepiolite.

In Figure 2 the recorded THT breakthrough curves (THT concentration in the filtered natural gas plotted against the duration of flow) are shown for various adsorbent samples, specifically bentonite, attapulgite and sepiolite.

### Description of the invention

Certain naturally occurring clay minerals from the hormite group (consisting of, inter alia, palygorskite, attapulgite, sepiolite and paramontmorillonite) are found, surprisingly, to be particularly active at room temperature in the removal of THT from natural gas and to be able to adsorb an appreciable amount of THT (approximately 11 g THT per litre adsorbent) before the THT concentration in the filtered natural gas reaches 0.1 ppm. Before this point is reached the THT concentration in the filtered natural gas is below the detection limit of the flame photometric detector of the gas chromatograph (approximately 20 ppb). Thus, only 2 litres of adsorbent would be needed for an annual amount of approximately 22 g THT to be removed. This is acceptable for application in a domestic micro combined heat and power installation.

The use of clay minerals from the hormite group as support for catalysts is known. For instance, ES 8602436 reports the use of natural sepiolite as support material for reduction catalysts such as palladium, rhodium or ruthenium and in JP-A 04087626 a packed bed catalyst that consists of one of the metals vanadium, tungsten, molybdenum, chromium, manganese, iron, cobalt and nickel on a porous support such as, for example, sepiolite is described for the removal of nitrogen oxides with ammonia from boiler flue gas. JP-A 01007946 teaches that the discoloration of gold-plated jewellery can be counteracted by removing hydrogen sulphide, sulphur dioxide and moisture from the air in the enclosed chamber containing jewellery using specific adsorbents such as zeolites, sepiolite and active charcoal. Finally, a combination of a calcinated sepiolite and a metal-activated zeolite is described in US 5 447 701 as an air filter/odour remover for use in refrigerators.

Many applications of sepiolite therefore lie in the field of support material for catalysts when purifying flue gases or stationary air. The possible quality of sepiolite itself as a material for the removal of organo-sulphur compounds from fuel gas streams is therefore unexpected on the basis of the state of the art. Rather, the contrary was to be expected.

Thus, Sugiura compares (in: "Removal of methanethiol by sepiolite and various sepiolite-metal compound complexes in ambient air", Clay Science (1993), 9 (1), 33-41) the adsorption of methyl mercaptan from ambient air by sepiolite and active charcoal. In this comparison active charcoal is found to adsorb more than 10 times as much methyl mercaptan as sepiolite. On the basis of this it could be expected that active charcoal would be much better than sepiolite in the removal of sulphur compounds from fuel gases. It is therefore surprising that sepiolite is so suitable as a filter for organo-sulphur compounds from fuel gases, such as, for example, natural gas, city gas and LPG.

The present invention therefore comprises a method for the removal of gaseous organic sulphur compounds from fuel gas streams, in that the gas stream is brought into contact with an adsorbent, characterised in that the adsorbent used is a clay mineral from the hormite group. Minerals from the hormite group are, for example, palygorskite, attapulgite, sepiolite and paramontmorillonite. Combinations of minerals or combinations with other adsorbents can optionally also be used. Preferably, the clay mineral used is sepiolite. The minerals from the hormite group are known from the literature. Sepiolite and palygorskite are, for example, described by Galan (Clay Minerals (1996), 31, 443-453). Sepiolite is widely found in Spain. An advantage of this clay mineral for this method is that the sepiolite does not have to be subjected to a chemical or thermal pretreatment. A calcination step is thus, for example, not necessary. This makes the use of this material less expensive.

Sepiolite is capable of removing sulphur compounds that occur naturally and/or are added as odorant to natural gas streams, such as carbonyl sulphide, mercaptans, thiophenes and thiophanes, etc. Particularly good results are obtained in the case of the removal of gaseous organo-sulphur compound that belong to the group of mercaptans or thiophenes.

Here organic sulphur compounds are understood to be sulphur compounds having at least one C₁ - C₈ hydrocarbon group, the sulphur atom being in the divalent state and not being bound to oxygen or another hetero-atom. In particular, the compounds concerned are compounds of the general formula CₘHₙSₛ, where m is 1 - 8, in particular 2 - 6, n is an even number of at least 4 and between 2m - 6 and 2m + 2, in particular 2m or 2m + 2 and s is 1 or 2. These compounds include alkyl mercaptans, dialkyl sulphides, dialkyl disulphide and the cyclic analogues thereof. Examples are dimethyl sulphide, dimethyl disulphide, tert-butyl mercaptan and, in particular, tetrahydrothiophene (THT). The invention therefore comprises a method for the removal of gaseous organo-sulphur compounds, such as mercaptans or cyclic sulphides. Thiophene and thiophenol can likewise be bound by sepiolite.

A specific problem in the case of adsorption filters is competitive adsorption. For instance, natural gas also contains an appreciable quantity of higher hydrocarbons and, for example, the quantity of pentane in Dutch natural gas for commercial use is higher than the quantity of THT added. It is known that sepiolite is able to adsorb pentanes, amongst other compounds. Surprisingly, sepiolite adsorbs the THT very well despite the competitive presence of pentane and higher alkanes in the natural gas. The method according to the invention can therefore also be used for the adsorption of organic sulphur compounds from fuel gas streams other than natural gas, such as LPG and other light hydrocarbons, such as propane, butane, pentane, etc., or combinations thereof.

Clay minerals of the hormite group, and in particular sepiolite, are able to cope with large volumes without becoming saturated and have a high activity and selectivity for the organo-sulphur compounds. This makes these minerals extremely suitable for the removal of organo-sulphur compounds from fuel gas streams that are intended for membrane fuel cells. The present invention therefore also comprises a combination of 1) a gas filter based on a clay mineral from the hormite group and 2) a fuel cell, in particular of the PEMFC type. In practice, such a combination then comprises, respectively, a) a clay mineral to remove, in particular, organo-sulphur compounds from fuel gases (in particular natural gas), b) a fuel conversion chain (in which, as described above, the fuel gases (in particular natural gas) is converted into synthesis gas and c) the actual PEMFC unit and an after-burner.

The quantity of the clay mineral to be used will have to be determined depending on the quantity of natural gas to be purified. As described above, for the consumption by an average family a volume of 1,200 m³ natural gas per year will have to be purified, which corresponds to only approximately 2 litres (approximately 1,500 g) sepiolite per year. For example, the method can be carried out using approximately 0.25 -3 g sepiolite per m³ (Dutch) natural gas, preferably 0.5 - 2.5 gram. For a natural gas flow rate of approximately 0.2 m³/h approximately 0.15 - 0.5 gram sepiolite will have to be used. In practice it is found that approximately 35 - 150 gram sepiolite is adequate for the adsorption of 1 gram THT.

The sepiolite that is used is naturally occurring sepiolite, as is, for example, mined in Spain. This means that the sepiolite is 'contaminated' with other minerals, such as bentonite, attapulgite, dolomite, etc., and also zeolites. The higher the sepiolite content of the adsorbent, the better are the adsorption characteristics thereof. Preferably, the adsorbent contains 50 % (m/m), for example 80 or 90 % (m/m) or more sepiolite. More generally, this means that the adsorbent preferably contains more than 50 % (m/m), for example 80 or 90 % (m/m), of the clay mineral from the hormite group. In general, the naturally occurring sepiolite still has to be sieved or treated in such a way that particles of the desired particle size are obtained. This particle size will depend on the geometry used for the reactor. As a rule of thumb, the rule known to those skilled in the art of at least 10 particles over the diameter of the reactor bed and at least 50 particles over the length of the reactor bed can be adopted here. If this rule is adopted, a good 'plug flow' is obtained. The person skilled in the art will size the reactor such that the residence time of the gas in the reactor is maximum so as thus to enable as efficient as possible adsorption of THT on the sepiolite.

A suitable filter is, for example, of the packed bed type; a cylindrical canister in which the sepiolite can be placed. Stainless steel (for example grade 316L) is preferred as structural material because of the strength, the easy processibility and the relatively high chemical inertia. However, various plastics can also be considered (PVC, Teflon, polycarbonate, PET). A porous grating (glass filter) made of Pyrex glass, on which the sepiolite granules are placed, rests on, for example, a raised (inside) rim in the cylindrical canister, above the natural gas outlet. On top of the bed of sepiolite there is an analogous glass filter, onto which a specific quantity of inert, spherical fill material is poured (for example glass beads of approximately the same dimensions as the sepiolite granules). This bed of glass beads serves to distribute the natural gas stream uniformly over the reactor diameter (plug flow) so that an optimum contact with the sepiolite adsorbent granules is ensured. Finally, the fill in the cylindrical filter canister can be held in place via a (stainless steel) spring, having a perforated stainless steel gas distribution plate thereon, fixed at the top (natural gas inlet). The dimensions of the filter canister are, of course, dependent on the quantity of natural gas to be filtered per year. For 1,200 m³, a total volume of 4 1 could suffice. Suitable dimensions are, for example, a height of the filter canister of 30 cm and a diameter of 13 cm. However, other relationships are also possible, provided that the criteria for good plug flow are met. In this context it is important that the combination of particle size, height of the filter canister and the natural gas stream to be treated may not result in a distinct pressure drop over the bed containing sepiolite granules.

In addition to the said advantages of the clay minerals during the desulphurisation of fuel gases, the materials should be readily available, inexpensive, easy to handle (preliminary treatments such as drying should not be necessary) and, moreover, they should be capable of regeneration. Regeneration can, for example, be effected by stripping with heated air (50°C - 300 °C), it being possible for the stripped THT to be combusted in the peak burner of the micro combined heat and power installation.

In contrast to adsorbents that are based on heavy metals, such as charcoal impregnated with copper and chromium, these clay minerals can be processed in an environmentally friendly manner after use. If all of the THT can be stripped from the saturated sepiolite using heated air, the sepiolite can be re-used. If the adsorption characteristics after stripping are not adequate, the stripped sepiolite can be dumped. Unstripped sepiolite, or sepiolite containing residual sulphur, can be processed in a waste incinerator.

These abovementioned characteristics make sepiolite eminently suitable as filter material for large-scale application of micro combined heat and power for domestic use. Therefore, the invention also relates to the use of clay minerals from the hormite group for the removal of organo-sulphur compounds from fuel gas streams.

Furthermore, the aim of one embodiment of the invention is a method in which the clay mineral is pretreated and with which the clay mineral has been provided with a metal salt or a metal oxide. Surprisingly, it is found that the adsorption of a number of organo-sulphur compounds increases. Thus, for example, with this method a mixture of organo-sulphur compounds, such as, for example, a mixture of THT and mercaptans, can suitably be removed from fuel gas streams.

Metals that can be used are transition metals, lanthanides and also some alkali metals or alkaline earth metals, such as metals from the groups Ia, Ib, IIb, IIIb, IVb, Vb, VIIb, VIII of periodic system. In particular, this embodiment comprises a method where the metal is chromium, manganese, iron, cobalt, nickel or copper. Metal salts that can be used are, for example, chlorides, nitrates, sulphates, chlorates, phosphates, acetates, etc. In one embodiment a clay mineral is used, the clay mineral being impregnated with an iron(II) salt or iron(III) salt. In another embodiment metal chlorides are used and the invention comprises, for example, a method where the metal salt is an iron(II) chloride or iron(III) chloride. The salts can also be coordinated by water molecules.

The loading with the metal (in the form of a metal salt or metal oxide) will depend on the metal chosen. In general the quantity of metal will be approximately 0.2 - 50 % (m/m) (based on the metal relative to the clay mineral), preferably between 0.5 and 20 % (m/m), for example 2 or 5 % (m/m).

In one embodiment of the invention a method is used in which the metal salt is applied to the clay mineral by means of impregnation. Preferably, this is carried out using aqueous solutions or suspensions, at temperatures of up to approximately 60 - 80 °C, for example approximately 40 °C. Here use can be made of the incipient wetness technique (dry impregnation). In a specific embodiment a method is used in which the clay mineral, for example sepiolite, is impregnated with iron(III) chloride.

Good results are achieved when the clay mineral is loaded as follows:
- the desired quantity of metal salt, approximately 0.2 - 50 % (m/m) (based on the metal relative to the clay mineral), is mixed with a fluid,
- the solution or suspension is mixed with the clay mineral at temperatures of up to approximately 60 - 80 °C, with stirring and/or using ultrasonic waves,
- the entire mixture is dried at temperatures of up to approximately 60 - 80 °C (in air).

If a suspension is used, the incipient wetness method can be employed.

Surprisingly it is found that such impregnated clay minerals, in particular sepiolite that has been impregnated and dried at relatively low temperatures, has good adsorptions, for example, for THT, even at adsorption temperatures of approximately 30 - 50°C.

Mercaptans are also, for example better adsorbed when sepiolite has been impregnated with a copper salt, for example copper acetate. By this means a further aim is achieved, i.e. that a hormite, in particular a sepiolite, is obtained that with the method according to the invention at relatively high temperatures (for example approximately 30 - 50 °C) has a higher capacity for organo-sulphur compounds in the fuel gas stream than the starting material.

This has the advantage that whilst, for example, the adsorption of the non-impregnated sepiolite decreases if the temperature rises from approximately 20 to approximately 40 °C, the adsorption in respect of, for example, THT by the sepiolite impregnated with, for example, an iron(III) chloride is very high at 40 °C. In applications such as, for example, micro combined heat and power stations, where the temperature of the adsorbent can be raised by the close proximity of the power station, the clay mineral that has been provided with a metal salt or a metal oxide, in particular a clay mineral impregnated with a metal salt, has advantages.

The clay mineral can also be provided with various metal salts and/or metal oxides or combinations thereof, for example oxides of iron and chromium, or copper and chromium, copper and iron, etc., more particularly, for example, sepiolite impregnated with a copper salt (such as copper acetate) and an iron salt (such as iron(III) chloride).

The aim of another embodiment of the invention is the method according to the invention in which the clay mineral is combined with a second adsorbent. This has the advantages that more organo-sulphur compounds can be adsorbed or that, for example, mixtures of organo-sulphur compounds can be better removed form fuel gas streams. What is achieved by this means, as a further aim, is that as broad as possible a spectrum of organo-sulphur compounds can be efficiently removed from fuel gas streams with the aid of the method of the invention.

Thus, the invention can also comprise a method wherein the second adsorbent is a material chosen from the group consisting of natural or synthetic clay mineral, active charcoal, natural or synthetic zeolite, molecular sieve, active alumina, active silica, silica gel, diatomaceous earth and pumice, or other adsorbents known to those skilled in the art. Preferably, adsorbents that are used as second adsorbent have a BET surface area of from 1 m²/g, for example between 5 and 1,500 m²/g. In one embodiment the invention also comprises a method wherein the second adsorbent has been provided with a metal salt or a metal oxide.

The method according to the invention works over a broad temperature range. In particular, the invention comprises a method wherein the organo-sulphur compounds are removed at a temperature of between -40 and 100 °C, for example '10 - 50 °C. This is advantageous compared with adsorption methods that work only at high temperature, for example > 200 °C.

The invention also relates to a combination of adsorbents consisting of a clay mineral from the hormite group and a second adsorbent. In one embodiment thereof, the invention comprises a combination of adsorbents, wherein the clay mineral and/or the second adsorbent has been provided with a metal salt or a metal oxide. The ratio of the two adsorbents will depend on the application for which the combination is used. The percentage by mass of the clay mineral from the hormite group can be, for example, 50 % or more. The loading of one or both adsorbents can, as described above for clay minerals from the hormite group, also approximately 0.2 - 50 % (m/m) (based on the metal relative to an adsorbent (either clay mineral or second adsorbent).

Where reference is made to a second adsorbent, this signifies that in any event a second adsorbent is present in addition to the clay mineral from the hormite group. This second adsorbent is an adsorbent other than the clay mineral from the hormite group, for example one of the adsorbents mentioned above. The term 'second adsorbent' can also be used to refer to a combination of adsorbents, just as the term 'both' does not have to relate to only one additional adsorbent, but can also denote a number of adsorbents in addition to an adsorbent from the hormite group. If combinations of ('second') adsorbents are used, these can be used, for example, in the form of mixtures or in the form of filters positioned in series (i.e. spatially separated).

If reference is made to the loading of a second adsorbent, this signifies that if several adsorbents are present, in addition to the clay mineral from the hormite group, at least one of these additional adsorbents has been loaded with (i.e. provided with) a metal (salt and/or oxide). The way in which this can be effected has been described above in connection with the loading of clay minerals from the hormite group. If zeolites are used as second adsorbent, these zeolites can also be ion-exchanged with metal salts.

In a specific embodiment the invention comprises a combination of adsorbents consisting of a clay mineral from the hormite group that has been provided with a metal salt or a metal oxide (loaded hormite, for example sepiolite impregnated with iron(III) chloride) and a clay mineral from the hormite group that has not been provided with a metal salt or a metal oxide (non-loaded hormite, for example sepiolite). The advantage of such a combination is that a higher capacity for, for example, mercaptans can be obtained. For practical applications the loaded hormite can make up approximately 10 % (V/V) or more of the total combination of adsorbents. In this embodiment the second adsorbent is indeed a clay mineral from the hormite group.

The combination of adsorbents can be arranged in various ways. Thus, the invention comprises both a combination of adsorbents where the adsorbents are mixed (for example by the physical mixing of the adsorbents) and a combination where the adsorbents are arranged in series. For example a pressed filter or a filter arrangement in which loaded sepiolite (for example sepiolite impregnated with iron(III) chloride), non-loaded sepiolite and active charcoal are present in succession. Depending on the application, the person skilled in the art can choose between a large number of binary, ternary and optionally higher order combinations.

In the case of a combination of adsorbents, especially in the case of mixtures, the combination preferably contains 30 % (m/m) or more of the clay mineral from the hormite group, for example 50, 60 or 70 % (m/m) or more. A possible loading of one or more of the adsorbents with a metal salt or metal oxide and the envisaged application can be taken into account here. In a specific embodiment the aim of the invention is a combination of adsorbents, where at least one of the adsorbents has been impregnated with iron(III) chloride.

In applications where adsorbents are arranged in series and where one (or more) adsorbents have been loaded, the gas stream is preferably first passed through a loaded adsorbent and then passed through an optionally non-loaded adsorbent.

The invention also comprises the use of a combination of adsorbents, as described above, for the removal of organo-sulphur compounds from fuel gas streams, for example from natural gas, city gas or LPG.

A further aim of the invention is a combination of a gas filter based on a combination of adsorbents according to the invention (see above) and a fuel cell.

### Examples

### Test equipment and test conditions for Example 1 and 2

The adsorption experiments were carried out in a manually operated flow set-up made of-for THT adsorption-inert materials such as Teflon (lines, taps, flow meters) and glass (reactor). The set-up is effective under virtually atmospheric pressure and ambient temperature and has a connection to the local natural gas network. Moreover, there is a facility for feeding preheated compressed air through the adsorbent bed for, for example, regeneration experiments. The total quantity of natural gas fed through is determined using a standard dry gas meter. The natural gas or air flow through the set-up can be set by means of a flow meter positioned downstream of the reactor. THT in natural gas is automatically determined by a Shimadzu gas chromatograph equipped with a flame photometric detector which has a detection limit of approximately 20 ppb for THT. The set-up also has an electrochemical THT detector for indicative determinations (resolution and detection limit approximately 0.2 ppm) of the THT content in the natural gas.

An adsorption experiment starts with placing approximately 70 ml adsorbent (particle size 1 - 3 mm) in the glass reactor (internal diameter 2.5 cm, height of the bed approximately 15 cm), after which the set-up is checked for leaks. The automatic analysis is then started and the natural gas is fed via the reactor bypass to the gas chromatograph to determine the initial concentration of THT in the natural gas (approximately 5 ppm). Once this initial concentration is stable, the natural gas is fed through the reactor via the gas meter. During this operation the temperature in the adsorbent bed is measured using a thermocouple. The experiment is terminated when the THT concentration in the filtered gas is found to be greater than or equal to 0.1 ppm. Table 1 gives a list of the samples tested and the test conditions.

### Example 1

In this example sepiolite (obtainable as dust-free cat litter granules; > 80 % (m/m) sepiolite and < 20 % (m/m) zeolite) is compared with various common adsorbents such as active charcoal (Norit, code RB1; peat-based, steam-activated, extruded, not impregnated); active charcoal impregnated with copper and chromium (Norit, code RGM1; peat-based, steam-activated and impregnated); and copper oxide / zinc oxide alumina (BASF R3-12; metal/metal oxide). The sepiolite of the present invention is able to bind the most sulphur.

**Table 1: List of samples tested and test conditions for Examples 1 and 2**

| Adsorbent tested: | Active charcoal, Active charcoal impregnated with copper and chromium, Copper oxide / zinc oxide / alumina, Sepiolite |
|---|---|
| Volume of adsorbent bed: | 70 ml |
| Weight of adsorbent bed: | 27 - 75 g |
| Particle size: | 1 - 3 mm |
| Gas flow rate: | 3 l/min |
| | (standard temperature and pressure: 20°C; 1 atm. (101.325 N/m²) |
| Superficial linear gas velocity | 10 cm/sec |
| Temperature of adsorbent bed: | 16°C - 25 °C (ambient temperature) |
| Pressure of adsorbent bed: | 1.1 bar(a) |
| Natural gas composition (% (V/V)): | 78.4 % methane, |
| | 4.13 % ethane, |
| | 0.95 % propane, |
| | 0.30 % butane (n- and iso-), |
| | 0.04 % pentane, |
| | 0.05 % hexane, |
| | 13.8 % nitrogen, |
| | 2.21 % carbon dioxide |
| | 18 mg/m³ THT |

### Results of THT adsorption tests

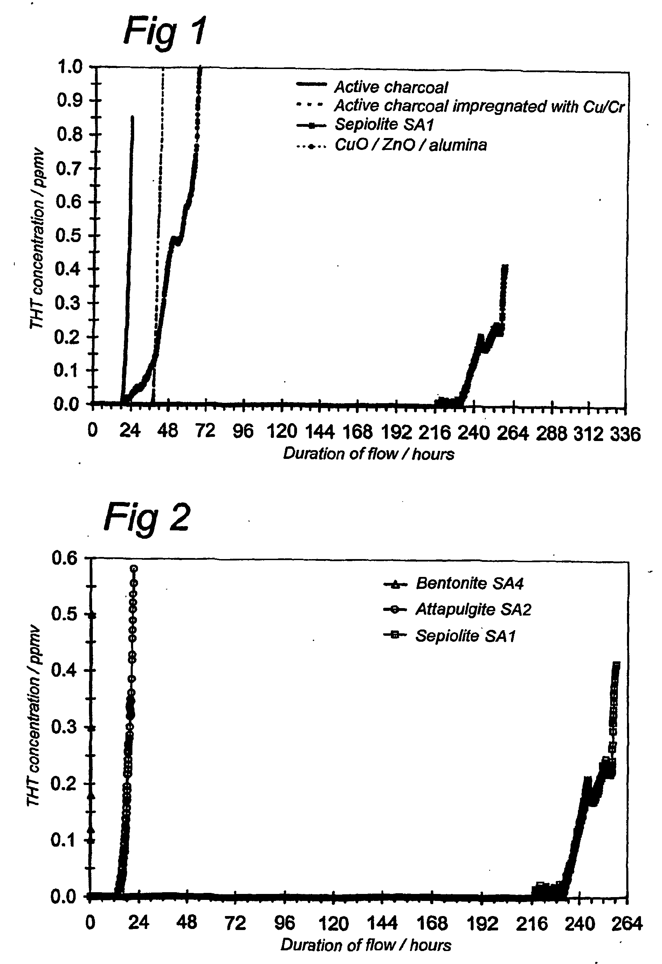

The THT breakthrough curves (THT concentration in the filtered natural gas plotted against the duration of flow) for the abovementioned adsorbent samples are given in Figure 1. The breakthrough curves clearly show that sepiolite (sepiolite sample SA1) adsorbs five to ten times more THT than the active charcoals and the copper oxide/zinc oxide/alumina material. With the exception of the sepiolite, a highly exothermic temperature effect was observed for the other adsorbents at the start of the adsorption experiment as a consequence of the exothermic co-adsorption of higher hydrocarbons in the natural gas. This implies that such adsorbents can be used in relatively large quantities in a micro heat and power installation only with special precautionary measures (for example cooling).

The capacities for THT adsorption derived from Figure 1 are shown in Table 2, together with the quantity of adsorbent required for a quantity of natural gas of 1,200 m³ to be removed annually.

**Table 2: Summary of capacity results of THT adsorption experiments (Example 1)**

| Adsorbent | m³ filtered natural gas per litre adsorbent for 0.1 ppm breakthrough of THT | THT adsorption capacity in % (m/m) S for 0.1 ppm breakthrough of THT | Filter size required for 1,200 m³ natural gas | |
|---|---|---|---|---|
| | | | Vol. (1) | Weight (kg) |
| Active charcoal | 50 | 0.07 | 24.0 | 11.4 |
| Active charcoal impregnated with Cu/Cr | 111 | 0.16 | 10.8 | 5.0 |
| CuO / ZnO / alumina | 100 | 0.06 | 12.0 | 13.5 |
| Sepiolite | 589 | 0.54 | 2.0 | 1.5 |

It can be seen from Table 2 that, for use as a THT filter for a micro heat and power installation, in the case of sepiolite only 2 litres of material are needed to remove THT from the annually required quantity of natural gas.

### Example 2

In this example sepiolite (as in Example 1) is compared, under the same conditions as in Example 1, with attapulgite (baked clay granules, 85 % (m/m) attapulgite for cat litter from Tijssen, Hazerswoude, The Netherlands) and bentonite (cat litter granules, lump-forming - coarse), which is also a naturally occurring clay mineral. These materials can be obtained from grocery stores and the like.

It can be seen the comparison of these materials as well, see Figure 2, that sepiolite (sample SA1) is able to adsorb much more sulphur than the bentonite (sample SA4) and attapulgite (sample SA2).

### Test equipment and test conditions for Example 3 - 6

The adsorption experiments were carried out in a manually operated flow set-up that was connected via two open/shut taps and an outflow protective device (needle valve) to the 100 mbar(o) (o = overpressure) natural gas supply network. A (cylinder) gas can also be connected via this connection, as desired. The set-up is also connected via an open/shut tap and a regulator to the central compressed air supply.

For experiments with LPG the set-up was connected via an outflow protective device and a regulator to an LPG vaporiser. The vaporiser was provided with flexible and stainless steel-reinforced feed and discharge lines for LPG. Both gaseous and liquid LPG can be supplied from the tanks intended for this purpose (a 25 l cooking gas tank for LPG vapour supply and a 36 l tank for liquid LPG supply). If liquid LPG is supplied, the pressurised (approximately 5 - 8 bara) (liquid) LPG is vaporised in the vaporiser with the aid of warm water at 50 °C. A regulator integrated in the vaporiser then lowers the LPG vapour pressure to approximately 0.1 - 0.2 bar(o). Finally, the LPG pressure is brought down to 0.1 bar(o) via a regulator fitted in the feed line to the reactors.

The gas flow rate and the total quantity of gas fed in are controlled by, respectively, a flow meter installed downstream of the reactors and by a gas meter installed upstream of the reactors.

To enable the adsorption characteristics of sulphur-containing odorants (for example tetrahydrothiophene, tertiary butyl mercaptan and ethyl mercaptan) on diverse porous materials to be studied, the set-up is provided with two glass packed-bed reactors with an internal volume of approximately 0.1 (reactor 1) and approximately 0.05 l (reactor 2), respectively. During an adsorption experiment the temperature in the reactor bed of the larger, not thermostatically controlled, reactor, can be measured using a type K thermocouple. The smaller reactor is partially submerged in a water bath, by means of which the temperature can be adjusted between -5°C and 80 °C.

Downstream of the reactor the sulphur concentration in fuel gas is determined automatically by means of a Shimadzu gas chromatograph equipped with a flame photometric detector which has a detection limit of approximately 20 ppb for organic sulphur compounds. The set-up also has a facility for manual determination of the concentration of sulphur compounds (THT and mercaptans) via two electrochemical monitors. The gas flowing out of the set-up is fed to the outside via a separate off-gas line.

A small side stream of the outflowing gas is tapped off for analysis by means of the GC-FPD. To prevent undesired adsorption of sulphur compounds on steel gas lines and the like, the set-up is as far as possible made of materials that are inert to adsorption, such as Teflon (lines, taps, flow meters) and glass (reactors).

Table 3 gives a summary of the samples tested and the test conditions.

**Table 3: Summary of samples tested and test conditions for Examples 3 - 6**

| | |
|---|---|
| Adsorbent tested: | Example 3: 5 % (m/m) Cu-impregnated sepiolite |
| | Example 4: 2 % (m/m) Cu-impregnated sepiolite |
| | Example 5: 2 % (m/m) Cu-impregnated sepiolite |
| Volume of adsorbent bed: | 10 ml |
| Weight of adsorbent bed: | 5 - 6 g |
| Particle size: | 0.5 - 1 mm |
| Gas flow velocity: | 0.5 1/min |
| | (standard temperature and pressure: 20 °C; 1 atm. (101.325 N/m²) |
| Superficial linear gas velocity | 5 cm/sec |
| Temperature of adsorbent bed: | 40 °C (ambient temperature) |
| Pressure of adsorbent bed: | 1.1 bar(a) |
| Fuel gas composition, Example 3 | 81.33 % methane, |
| (% (V/V)): | 2.80 % ethane, |
| (synthetic natural gas (Air Liquide) | 0.40 % propane, |
| from gas cylinder (water volume 50 l)) | 0.10 % n-butane, |
| | 14.47 % nitrogen, |
| | 0.9 % carbon dioxide |
| | 4 ppmv TBM (tertiary butyl mercaptan) |
| | 1.4 ppm DMS (dimethyl sulphide) |
| Fuel gas composition, Example 4 | 78.4 % methane, |
| (%(V/V)): | 4.13 % ethane, |
| (natural gas from local gas supply) | 0.95 % propane, |
| | 0.30 % butane (n- and iso-), |
| | 0.04 % pentane, |
| | 0.05 % hexane, |
| | 13.8 % nitrogen, |
| | 2.21 % carbon dioxide |
| | 18 mg/m³ THT |

| | |
|---|---|
| Fuel gas composition, Example 5 | approx. 60 % propane, |
| (% (V/V)): | approx. 40 % butane (n- and iso-), |
| (commercial LPG (BK-autogas) from cooking gas tank) | approx 2 ppmv EM (ethyl mercaptan) |

For reference purposes, each of the above gas mixtures was also tested with the untreated sepiolite, which is purchased as dust-free cat litter under the name 'Sanicat' (TOLSA).

An adsorption experiment starts with placing approximately 10 ml adsorbent material (particle size 0.5 - 1 mm) in the smaller glass reactor, after which the set-up is checked for leaks. The automatic analysis is then started and the natural gas is fed via the reactor bypass to the gas chromatograph to determine the initial concentration of sulphur in the fuel gas (approximately 1 - 5 ppm). Once this initial concentration is stable, the natural gas is fed via the gas meter through the reactor that is thermostat-controlled at 40 °C. The experiment is terminated when the concentration of sulphur compounds in the filtered fuel gas is found to be greater than or equal to 0.1 ppm.

### Examples 3 - 5: impregnation with copper

An amount of 25 g sepiolite of particle size 0.5 - 1.0 mm was weighed out accurately and placed in a glass beaker. In the case of a so-called 'dry impregnation' (incipient wetness) this amount of sepiolite can adsorb a maximum of approximately 40 ml water. 1.57 g copper acetate was then weighed out and dissolved in approximately 40 ml demineralised water in a glass beaker with the aid of vibration at room temperature in an ultrasonic vibration bath for approximately 10 minutes. The sepiolite was then impregnated with the resulting solution by means of dry impregnation. After brief manual stirring, the impregnated sepiolite was dried in air for a minimum of 24 hours in a drying oven at 40 °C. The material dried in this way contains approximately 2 % (m/m) Cu²⁺ and is ready for use for adsorption determinations. A sample containing 5 % (m/m) Cu²⁺ was prepared in the same way as described above.

### Results

The capacities determined for adsorption of the sulphur compounds are shown in Table 4.

**Table 4. Summary of capacity results of adsorption experiments**

| Sulphur compound | Adsorption capacity in gram/litre adsorbent for 0.1 ppm break-through | | |
|---|---|---|---|
| | Example | Sepiolite | Sepiolite impregnated with Cu |
| TBM | 3 | 0.5 | > 12 (5 % (m/m) Cu) |
| THT | 4 | 3.4 | 2.3 (2 % (m/m) Cu) |
| EM | 5 | < 0.1 | 1.2 (2 % (m/m) Cu) |

The fuel gas from Example 3 and 5 also contains a small amount of DMS. The capacity results for DMS are not included in Table 4.

Because the quantity of the gas mixture available in Example 3 ran out, no clear breakthrough of TBM was detected in this example. The capacity shown thus relates to the total quantity of gas passed through. However, for a relatively brief period during the adsorption test a 'temporary' breakthrough (maximum approx. 0.2 ppmv) of an unknown sulphur compound was detected. This compound was identified by means of a GC-MS analysis of a gas sample as the dimer of TBM (C₄H₉-S-S-C₄H₉, di-tertiary butyl disulphide).

In the case of Example 5 di-ethyl disulphide (C₂H₅-S-S-C₂H₅, the dimer of ethyl mercaptan was found to break through at a certain point in time. The capacity in Table 4 thus relates to the quantity of filtered LPG vapour (gas mixture in Example 5) for the breakthrough of approximately 0.05 ppmv di-ethyl disulphide (corresponds to 0.1 ppmv 'S'). Breakthrough of ethyl mercaptan was not detected before the LPG cooking gas tank ran out.

It can be seen from Table 4 that upgrading the sepiolite with copper leads to a distinctly greater adsorption/conversion capacity, in particular in the case of mercaptans TBM (in synthetic natural gas) and EM (in commercial LPG). In the case of THT, however, the performance of the sepiolite impregnated with copper is somewhat poorer than that of the untreated sepiolite.

### Example 6: Impregnation with FeCl₃

### Preparation of adsorbent:

An amount of 15 g sepiolite of particle size 0.5 - 1.0 mm was placed in a glass beaker and mixed with 4.35 g FeCl₃. While stirring well, water was then added in a quantity such that the resulting substance was just moist. Finally, the moist substance was dried for at least 24 hours in air in an oven at 40 °C. The material prepared in this way contains approximately 10 % (m/m) Fe³⁺ and is ready for use for adsorption tests.

### Test equipment and test conditions

The test equipment and test conditions are as described for Example 3 - 6. The adsorption test was carried out using natural gas from the local gas supply. In addition to the sepiolite loaded with iron, untreated sepiolite and active charcoal impregnated with copper and chromium (Norit, code RGM-1) were also tested under the same conditions for reference purposes.

### Results

The THT capacity determined for the sepiolite loaded with iron is shown in Table 5. For comparison, the THT capacities of untreated sepiolite and of active charcoal impregnated with copper and chromium are also included in the table.

**Table 5: THT capacities of untreated sepiolite, active charcoal impregnated with copper and chromium and sepiolite loaded with Fe³⁺**

| Adsorbent | Adsorption capacity in gram/litre adsorbent for 0.1 ppm breakthrough |
|---|---|
| Cu/Cr active charcoal | 1.4 |
| Untreated sepiolite | 3.4 |
| Fe³⁺-sepiolite | 12.5 |

It can be seen from Table 5 that at a temperature of 40 °C the sepiolite loaded with iron is able to adsorb approximately 3.7 times more THT than untreated sepiolite and approximately 9 times more than the active charcoal impregnated with copper/chromium.

For a 1 kWe PEMFC micro combined heat and power installation this means that THT can be removed from the annual consumption of natural gas (approximately 1,200 m³) with a volume of only about 2 litres of iron-sepiolite.

### Example 7

Table 6 gives a list of combinations of adsorbents according to the invention that can be used to remove (organo-)sulphur compounds from fuel gas streams.

**Table 6: Examples of filter composition for odorised fuel gases where the odorant mixture contains THT**

| Odorant mixture | Preferred composition of odorant filter |
|---|---|
| THT | Sepiolite - sepiolite impregnated with transition metal and/or active charcoal impregnated with copper/chromium |
| THT + one or more mercaptans | Sepiolite - sepiolite impregnated with transition metal or active charcoal impregnated with copper/chromium |
| THT + one or more mercaptans | Sepiolite impregnated with transition metal and non-loaded sepiolite |
| THT + one or more mercaptans | Sepiolite - sepiolite impregnated with transition metal and active charcoal impregnated with copper/chromium |
| THT + one or more sulphides | Sepiolite - zeolite and/or molecular sieves and/or active charcoal |
| THT + one or more mercaptans + one or more sulphides | Sepiolite - sepiolite impregnated with transition metal and/or active charcoal impregnated with copper/chromium and/or zeolite and/or molecular sieve |

The combinations of adsorbents can be combined, but they can also be arranged in series (spatially separated).

## Claims

1. Method for the removal of organo-sulphur compounds from fuel gas streams wherein the gas stream is brought into contact with an adsorbent, **characterised in that** the adsorbent is a clay mineral from the hormite group, and wherein the clay mineral comprises sepiolite.

2. Method according to Claim 1, wherein the gaseous organo-sulphur compound is a mercaptan or cyclic sulphide.

3. Method according to Claim 1, wherein the gaseous organo-sulphur compound is tetrahydrothiophene.

4. Method according to one of Claims 1-3, wherein the fuel gas is subsequently converted to synthesis gas.

5. Method according to one of Claims 1-4, wherein the fuel gas stream comprises natural gas.

6. Method according to one of Claims 1-5, wherein 0.25-3 g clay mineral is used per m³ gas.

7. Method according to one of Claims 1-6, wherein the sepiolite is not pretreated.

8. Method according to one of Claims 1-6, wherein the clay mineral has been provided with a metal salt or a metal oxide.

9. Method according to Claim 8, wherein the metal is chromium, manganese, iron, cobalt, nickel or copper.

10. Method according to Claim 8 or 9, wherein the metal salt is applied to the clay mineral via impregnation.

11. Method according to one of Claims 8-10, wherein the clay mineral is impregnated with iron (II) salt or iron (III) salt.

12. Method according to one of Claims 8-11, wherein the clay mineral is impregnated with iron (III) chloride.

13. Method according to one of Claims 1-12, wherein the clay mineral is combined with a second adsorbent, wherein the second adsorbent is a material chosen from naturally occurring or synthetic clay mineral, active charcoal, naturally occurring or synthetic zeolite, molecular sieve, active alumina, active silica, silica gel, diatomaceous earth and pumice, and wherein the second adsorbent has a BET surface of from 1 m²/g.

14. Method according to Claim 13, wherein the second adsorbent has been provided with a metal salt or a metal oxide.

15. Method according to one of Claims 1-14, wherein the organo-sulphur compounds are removed at a temperature of between -40 and 100°C.

16. Combination of adsorbents consisting of a clay mineral from the hormite group, wherein the clay mineral comprises sepiolite, and a second adsorbent, wherein the second adsorbent is a material chosen from naturally occurring or synthetic clay mineral, active charcoal, naturally occurring or synthetic zeolite, molecular sieve, active alumina, active silica, silica gel, diatomaceous earth and pumice, and wherein the second adsorbent has a BET surface of from 1 m²/g.

17. Combination of adsorbents according to Claim 16, wherein the clay mineral and/or the second adsorbent has been provided with a metal salt or a metal oxide.

18. Combination of adsorbents according to Claims 16 or 17 consisting of a clay mineral from the hormite group that has been provided with a metal salt or a metal oxide and a clay mineral from the hormite group that has not been provided with a metal salt or a metal oxide.

19. Combination of adsorbents according to one of Claims 16-18, wherein the adsorbents are mixed or arranged in series.

20. Combination of adsorbents according to one of Claims 16-19, wherein at least one of the adsorbents has been impregnated with an iron (II) salt or iron (III) salt.

21. Combination of adsorbents according to one of Claims 16-20, wherein at least one of the adsorbents has been impregnated with iron (II) chloride.

22. Combination of a gas filter based on a clay mineral from the hormite group, wherein the clay mineral comprises sepiolite, and a fuel cell.

23. Combination of a gas filter based on a combination of adsorbents according to one of Claims 16-21 and a fuel cell.

24. Use of a clay mineral of the hormite group, wherein the clay mineral comprises sepiolite, for the removal of organo-sulphur compounds from fuel gas streams.

25. Use of a combination of adsorbents according to one of Claims 16-21 for the removal of organo-sulphur compounds from fuel gas streams.

## Patentansprüche

1. Verfahren zur Entfernung von Organoschwefelverbindungen aus Brenngasströmen, wobei der Gasstrom mit einem Adsorptionsmittel in Kontakt gebracht wird, **dadurch gekennzeichnet, dass** das Adsorptionsmittel ein Tonmineral aus der Hormitgruppe ist und wobei das Tonmineral Sepiolith umfasst.

2. Verfahren nach Anspruch 1, wobei die gasförmige Organoschwefelverbindung ein Mercaptan oder ein cyclisches Sulfid ist.

3. Verfahren nach Anspruch 1, wobei die gasförmige Organoschwefelverbindung Tetrahydrothiophen ist.

4. Verfahren nach einem der Ansprüche 1 bis 3, wobei das Brenngas anschließend in Synthesegas umgewandelt wird.

5. Verfahren nach einem der Ansprüche 1 bis 4, wobei der Brenngasstrom Erdgas umfasst.

6. Verfahren nach einem der Ansprüche 1 bis 5, wobei 0,25 bis 3 g Tonmineral pro m³ Gas verwendet werden.

7. Verfahren nach einem der Ansprüche 1 bis 6, wobei der Sepiolith nicht vorbehandelt ist.

8. Verfahren nach einem der Ansprüche 1 bis 6, wobei das Tonmineral mit einem Metallsalz oder einem Metalloxid versehen worden ist.

9. Verfahren nach Anspruch 8, wobei das Metall Chrom, Mangan, Eisen, Cobalt, Nickel oder Kupfer ist.

10. Verfahren nach Anspruch 8 oder 9, wobei das Metallsalz über Imprägnierung auf das Tonmineral aufgebracht wird.

11. Verfahren nach einem der Ansprüche 8 bis 10, wobei das Tonmineral mit Eisen(II)-salz oder Eisen(III)-salz imprägniert wird.

12. Verfahren nach einem der Ansprüche 8 bis 11, wobei das Tonmineral mit Eisen(III)-chlorid imprägniert wird.

13. Verfahren nach einem der Ansprüche 1 bis 12, wobei das Tonmineral mit einem zweiten Adsorptionsmittel kombiniert wird, wobei das zweite Adsorptionsmittel ein Material ist, das ausgewählt ist aus natürlich vorkommendem oder synthetischem Tonmineral, Aktivkohle, natürlich vorkommendem oder synthetischem Zeolith, Molekularsieb, aktivem Aluminiumoxid, aktivem Siliciumoxid, Silicagel, Diatomeenerde und Bims und wobei das zweite Adsorptionsmittel eine BET-Oberfläche von ab 1 m²/g aufweist.

14. Verfahren nach Anspruch 13, worin das zweite Adsorptionsmittel mit einem Metallsalz oder einem Metalloxid versehen worden ist.

15. Verfahren nach einem der Ansprüche 1 bis 14, worin die Organoschwefelverbindungen bei einer Temperatur zwischen -40 und 100°C entfernt werden.

16. Kombination von Adsorptionsmitteln, bestehend aus einem Tonmineral aus der Hormitgruppe, wobei das Tonmineral Sepiolith umfasst, und einem zweiten Adsorptionsmittel, wobei das zweite Adsorptionsmittel ein Material ist, das ausgewählt ist aus natürlich vorkommendem oder synthetischem Tonmineral, Aktivkohle, natürlich vorkommendem oder synthetischem Zeolith, Molekularsieb, aktivem Aluminiumoxid, aktivem Siliciumoxid, Silicagel, Diatomeenerde und Bims und wobei das zweite Adsorptionsmittel eine BET-Oberfläche von ab 1 m²/g aufweist.

17. Kombination von Adsorptionsmitteln nach Anspruch 16, wobei das Tonmineral und/oder das zweite Adsorptionsmittel mit einem Metallsalz oder einem Metalloxid versehen worden sind.

18. Kombination von Adsorptionsmitteln nach den Ansprüchen 16 oder 17, bestehend aus einem Tonmineral aus der Hormitgruppe, das mit einem Metallsalz oder einem Metalloxid versehen worden ist, und einem Tonmineral aus der Hormitgruppe, das nicht mit einem Metallsalz oder einem Metalloxid versehen worden ist.

19. Kombination von Adsorptionsmitteln nach einem der Ansprüche 16 bis 18, wobei die Adsorptionsmittel gemischt oder in Reihe angeordnet sind.

20. Kombination von Adsorptionsmitteln nach einem der Ansprüche 16 bis 19, wobei mindestens eines der Adsorptionsmittel mit einem Eisen(II)salz oder einem Eisen(III)-salz imprägniert worden ist.

21. Kombination von Adsorptionsmitteln nach einem der Ansprüche 16 bis 20, wobei mindestens eines der Adsorptionsmittel mit Eisen(II)-chlorid imprägniert worden ist.

22. Kombination von einem Gasfilter, das auf einem Tonmineral aus der Hormitgruppe basiert, wobei das Tonmineral Sepiolith umfasst, und einer Brennstoffzelle.

23. Kombination von einem Gasfilter, das auf einer Kombination von Adsorptionsmitteln nach einem der Ansprüche 16 bis 21 basiert, und einer Brennstoffzelle.

24. Verwendung eines Tonminerals der Hormitgruppe, wobei das Tonmineral Sepiolith umfasst, zur Entfernung von Organoschwefelverbindungen aus Brenngasströmen.

25. Verwendung einer Kombination von Adsorptionsmitteln nach einem der Ansprüche 16 bis 21 zur Entfernung von Organoschwefelverbindungen aus Brenngasströmen.

## Revendications

1. Procédé d'élimination de composés organo-soufre de courants de gaz combustible dans lequel on met le courant gazeux en contact avec un adsorbant, **caractérisé en ce que** l'adsorbant est un minéral argileux du groupe hormite, et dans lequel le minéral argileux comprend la sépiolite.

2. Procédé selon la revendication 1, dans lequel le composé organo-soufre gazeux est un mercaptan ou un sulfure cyclique.

3. Procédé selon la revendication 1, dans lequel le composé organo-soufre gazeux est le tétrahydrothiophène.

4. Procédé selon l'une des revendications 1 à 3, dans lequel le gaz combustible est ensuite transformé en gaz de synthèse.

5. Procédé selon l'une des revendications 1 à 4, dans lequel le courant de gaz combustible comprend le gaz naturel.

6. Procédé selon l'une des revendications 1 à 5, dans lequel on utilise 0,25 à 3 g de minéral argileux par m³ de gaz.

7. Procédé selon l'une des revendications 1 à 6, dans lequel la sépiolite n'est pas prétraitée.

8. Procédé selon l'une des revendications 1 à 6, dans lequel on applique au minéral argileux un sel métallique ou un oxyde métallique.

9. Procédé selon la revendication 8, dans lequel le métal est le chrome, le manganèse, le fer, le cobalt, le nickel ou le cuivre.

10. Procédé selon la revendication 8 ou 9, dans lequel on applique le sel métallique au minéral argileux par imprégnation.

11. Procédé selon l'une des revendications 8 à 10, dans lequel on imprègne le minéral argileux avec un sel de fer(II) ou de fer(III).

12. Procédé selon l'une des revendications 8 à 11, dans lequel on imprègne le minéral argileux avec du chlorure de fer(III).

13. Procédé selon l'une des revendications 1 à 12, dans lequel on combine le minéral argileux avec un second adsorbant, dans lequel le second adsorbant est un matériau choisi parmi le minéral argileux d'origine naturelle ou synthétique, le charbon actif, la zéolite d'origine naturelle ou synthétique, le tamis moléculaire, l'alumine activée, la silice activée, le gel de silice, la terre à diatomées et la ponce, et dans lequel le second adsorbant a une surface BET à partir de 1 m²/g.

14. Procédé selon la revendication 13, dans lequel on applique au second adsorbant un sel métallique ou un oxyde métallique.

15. Procédé selon l'une des revendications 1 à 14, dans lequel les composés organo-soufre sont éliminés à une température entre -40 et 100°C.

16. Combinaison d'adsorbants constituée de minéral argileux du groupe hormite, dans laquelle le minéral argileux comprend la sépiolite, et un second adsorbant, dans lequel le second adsorbant est un matériau choisi parmi le minéral argileux d'origine naturelle ou synthétique, le charbon actif, la zéolite d'origine naturelle ou synthétique, le tamis moléculaire, l'alumine activée, la silice activée, le gel de silice, la terre à diatomées et la ponce, et dans lequel le second adsorbant a une surface BET à partir de 1 m²/g.

17. Combinaison d'adsorbants selon la revendication 16, dans laquelle on applique au minéral argileux et/out au second adsorbant un sel métallique ou un oxyde métallique.

18. Combinaison d'adsorbants selon la revendication 16 ou 17 constituée d'un minéral argileux du groupe hormite auquel on a appliqué un sel métallique ou un oxyde métallique et un minéral argileux du groupe hormite auquel on n'a pas appliqué de sel métallique ni d'oxyde métallique.

19. Combinaison d'adsorbants selon l'une des revendications 16 à 18, dans laquelle les adsorbants sont mélangés ou disposés en série.

20. Combinaison d'adsorbants selon l'une des revendications 16 à 19, dans laquelle au moins l'un des adsorbants est imprégné avec un sel de fer(II) ou un sel de fer(III).

21. Combinaison d'adsorbants selon l'une des revendications 16 à 20, dans laquelle au moins l'une des adsorbants est imprégné avec du chlorure de fer(II).

22. Combinaison d'un filtre à gaz à base d'un minéral argileux du groupe hormite, dans lequel le minéral argileux comprend de la sépiolite, et d'une pile à combustible.

23. Combinaison d'un filtre à gaz à base d'une combinaison d'adsorbants selon l'une des revendications 16 à 21 et d'une pile à combustible.

24. Utilisation d'un minéral argileux du groupe hormite, dans laquelle le minéral argileux comprend de la sépiolite, pour l'élimination de composés organo-soufre de courants de gaz combustible.

25. Utilisation d'une combinaison d'adsorbants selon l'une des revendications 16 à 21 pour l'élimination de composés organo-soufre de courants de gaz combustible.
